# EUROPEAN PATENT APPLICATION

(11) **EP 4 550 437 A1**
(43) Date of publication of application: **07.05.2025**
(21) Application number: 22953488.8
(22) Date of filing: 02.08.2022
(51) Int. Cl.: H01M 4/13, H01M 10/0525

(54) **NEGATIVE POLE PIECE, SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: FENG, Jingjie, Ningde, Fujian 352100 (CN); LI, Xing, Ningde, Fujian 352100 (CN); ZHANG, Chenchen, Ningde, Fujian 352100 (CN)
(74) Representative: Gong, Jinping
(86) International application number: PCT/CN2022/109708
(87) International publication number: WO 2024/026675

(57) **Abstract**

The embodiments of the present application provide a negative electrode plate, including: a current collector and a first active layer provided on a surface of the current collector, where the first active layer includes a first active material and a second active material, the specific surface area of the first active material is greater than the specific surface area of the second active material, the current collector includes a first region and a second region which are arranged in a first direction, and the first active layer corresponding to the first region includes a first active material, and the first active layer corresponding to the second region includes a second active material, the first region being a region formed by the negative electrode plate protruding from a positive electrode plate in the first direction, and the second region being a region formed by the negative electrode plate overlapping with the positive electrode plate in the first direction. The technical solution of the present application can maintain good cycling stability while avoiding lithium plating, facilitating the improvement of the performance of a battery.

## Description

### TECHNICAL FIELD

The present application relates to the field of battery technologies, in particular to a negative electrode plate, a secondary battery, a battery module, a battery pack, and an electric device.

### BACKGROUND

In recent years, with the application range of secondary batteries becoming wider and wider, the secondary batteries are widely applied to energy storage power supply systems such as hydraulic power, thermal power, wind power and solar power stations, and a plurality of fields such as electric tools, electric bicycles, electric motorcycles, electric vehicles, military equipment, and aerospace. As secondary batteries have been greatly developed, higher requirements for the energy density, cycle performance, and safety performance. etc. thereof are raised.

In the process of charging and discharging a secondary battery, lithium ions are continuously extracted and inserted on a positive electrode and a negative electrode; in a non-overlapping region between the negative electrode plate and the positive electrode plate, after multiple charging and discharging cycles, a phenomenon of lithium plating may occur in the non-overlapping region; the continuous accumulation of the plated lithium may cause a separator to be pierced, thereby affecting the safety of the secondary battery.

### SUMMARY

The present application is proposed in view of the described problem, and the object of the present application is to provide a negative electrode plate to solve the lithium plating problem while maintaining good cycling stability, thereby improving the performance of a secondary battery.

In order to achieve the described object, the present application provides a negative electrode plate, a secondary battery, a battery module, a battery pack, and an electric device.

A first aspect of the present application provides a negative electrode plate, including: a current collector and a first active layer provided on a surface of the current collector, wherein the first active layer includes a first active material and a second active material, the specific surface area of the first active material is greater than that of the second active material, the current collector includes a first region and a second region which are provided in a first direction, the first active layer corresponding to the first region includes the first active material, the first active layer corresponding to the second region includes the second active material, the first region is a region formed by the negative electrode plate protruding from a positive electrode plate in the first direction, and the second region is a region formed by the negative electrode plate overlapping with the positive electrode plate in the first direction.

In embodiments of the present application, the negative electrode plate includes a current collector and a first active layer provided on a surface of the current collector; the first active layer includes a first active material and a second active material, and the specific surface area of the first active material is greater than that of the second active material; the current collector includes a first region and a second region which are provided in a first direction, the first active layer corresponding to the first region includes a first active material, and the first active layer corresponding to the second region includes a second active material; the first region is a region formed by the negative electrode plate protruding from a positive electrode plate in the first direction, and the second region is a region formed by the negative electrode plate overlapping with the positive electrode plate in the first direction. In this way, at the first active layer corresponding to the first region, the rate of consumption of lithium ions is high, and accordingly the concentration of lithium ions is low, thereby preventing lithium plating from occurring in the first region; in addition, at the first active layer corresponding to the second region, the rate of consumption of lithium ions is low, and accordingly the concentration of lithium ions is high, and there are more lithium ions which can be extracted from this region and enter the positive electrode, thereby enabling the battery to maintain good cycling stability. Therefore, the technical solution of the present application can maintain good cycling stability while avoiding lithium plating, facilitating the improvement of the performance of a battery.

In any embodiment, the specific surface area of the first active material is 1.5-25 m²/g, and the specific surface area of the second active material is 0.1-2 m²/g. In this way, both the specific surface area of the first active material and the specific surface area of the second active material belong to an appropriate range, and both the safety performance and cycling stability performance of the battery can be achieved.

In any embodiment, the mass ratio of the first active material to the second active material in the first active layer corresponding to the first region is greater than 1, and the mass ratio of the first active material to the second active material in the first active layer corresponding to the second region is less than 1. In this way, on the one hand, the first active material in the first region occupies a large proportion, and lithium plating does not easily occur in the first region; on the other hand, the second active material in the second region occupies a large proportion, and the rate of consumption of lithium ions is within a suitable range, which is beneficial to improving the cycling stability performance of a battery.

In any embodiment, the negative electrode plate further includes: a second active layer located between the first active layer and the current collector, the second active layer including the first active material and the second active material, the second active layer corresponding to the first region including the second active material, and the second active layer corresponding to the second region including the first active material. In this way, lithium plating in the first region can be avoided, and lithium ion concentrations in the first region and the second region can be balanced, thereby improving the cycling stability of the battery.

In any embodiment, the mass ratio of the second active material to the first active material in the second active layer corresponding to the first region is greater than 1, and the mass ratio of the second active material to the first active material in the second active layer corresponding to the second region is less than 1. In this way, the first active layer and the second active layer of the negative electrode plate are taken as a whole, and the first active material and the second active material in the first active layer and the second active layer have substantially the same proportion, so that the safety performance and cycling stability of the battery can be both achieved.

In any embodiment, in the first direction, regions of the first active material and regions of the second active material are distributed alternately. In this way, the first active material and the second active material in the negative electrode plate are distributed more evenly, which helps improve performance of the negative electrode plate.

In any embodiment, the capacity per gram of the regions of the first active material is larger than the capacity per gram of the regions of the second active material. As the rate of consumption of lithium ions of the first active material is greater than that of the second active material, by setting the capacity per gram of the regions of the first active material to be larger than the capacity per gram of the regions of the second active material, the problem that the capacity of the regions of the first active material decreases too much due to excessive consumption of lithium ions can be solved to some extent, and in addition, the service life of the regions of the first active material is prolonged, thereby balancing the service life of the regions of the first active material and the service life of the regions of the second active material.

In any embodiment, the capacity per gram of the regions of the first active material is 300-1500 mAh g⁻¹, and the capacity per gram of the regions of the second active material is 200-400 mAh g⁻¹. In this way, the capacity of the regions of the first active material and the regions of the second active material is in an appropriate range, which helps to balance the service life of the two types of regions, thereby helping to improve the performance of the negative electrode plate.

In any embodiment, the porosity of the regions of the first active material is smaller than the porosity of the regions of the second active material. In this way, when the proportion of the second active material of the first active layer corresponding to the second region is greater than the proportion of the first active material, lithium ions in the electrolyte can have a larger diffusion channel to diffuse from the first active layer to the second active layer, thereby helping to improve the diffusion rate of ions of the negative electrode plate.

In any embodiment, the porosity of the regions of the first active material is 5-25%, and the porosity of the regions of the second active material is 15-50%. In this way, lithium plating in the second region can be avoided.

In any embodiment, the adhesive force between the regions of the first active material and the current collector is greater than the adhesive force between the regions of the second active material and the current collector. In this way, when the proportion of the first active material of the second active layer corresponding to the second region is greater than the proportion of the second active material, the adhesive force between the second active layer and the current collector is strong, and the phenomenon that the second active layer is separated from the current collector does not easily occur.

In any embodiment, the adhesive force between the regions of the first active material and the current collector is 10-30 N/m, and the adhesive force between the regions of the second active material and the current collector is 0-15 N/m. In this way, the adhesive force between the first active layer and/or the second active layer and the current collector is strong, and the first active layer and/or the second active layer are not easy to fall off the current collector.

In any embodiment, the thickness of the first active layer is greater than the thickness of the second active layer. As the thickness of the first active layer is greater than that of the second active layer, and in the first region, the first active layer includes more first active materials, and more lithium ions are consumed in the first active layer corresponding to the first region, so that the concentration of the lithium ions is lower, further reducing the risk of lithium plating in the first region of the first active layer.

In any embodiment, the regions of the first active material in the first active layer are aligned with the regions of the second active material in the second active layer. In this way, it is convenient to form the first active layer and the second active layer by means of a primary process, which helps to reduce processes.

In any embodiment, the first active layer and/or the second active layer further includes an adhesive and a conductive agent. In this way, it is convenient to bond the first active layer and/or the second active layer to a surface of the current collector, and at the same time, the electrical conductivity of the negative electrode plate is improved.

In any embodiment, the first active material and the second active material are selected from at least one of natural graphite, artificial graphite, soft carbon, hard carbon, silicon-based materials, and metal oxides.

In any embodiment, the active material of the first active material is natural graphite. In this way, the high capacity, low porosity, and high adhesive force of the first active material can be achieved.

In any embodiment, the active material of the second active material is artificial graphite. In this way, the low capacity, high porosity, and low adhesive force of the second active material can be achieved.

In any embodiment, the conductive agent is selected from at least one of conductive carbon black, acetylene black, small-particle conductive carbon black, ketjen black, graphene, carbon nanotubes, carbon fibers, and conductive graphite. In this way, the requirement of the negative electrode plate for electrical conductivity can be satisfied.

In any embodiment, the adhesive is selected from at least one of carboxymethyl cellulose sodium, sodium alginate, gelatin, styrene-butadiene rubber, polyvinylidene fluoride, a copolymer of vinylidene fluoride and hexafluoropropylene, polyamide, polyacrylonitrile, polyacrylate, polyacrylic acid, polyacrylate, polytetrafluoroethylene and chitosan. In this way, the requirements for the adhesive force between the first active layer and the second active layer and the current collector can be satisfied.

In any embodiment, the regions of the first active material are formed by a first active slurry coated on a surface of the current collector, the first active slurry including natural graphite, conductive carbon black, sodium carboxymethyl cellulose, and styrene butadiene rubber in a mass ratio of 96:2: 1: 1. By means of the first active slurry, the regions of the first active material satisfying the requirements can be manufactured.

In any embodiment, the regions of second active material are formed by a second active slurry coated on a surface of the current collector, the second active slurry including artificial graphite, conductive carbon black, sodium carboxymethyl cellulose, and styrene butadiene rubber in a mass ratio of 96:2: 1: 1. By means of the second reactive slurry, the regions of the second reactive material satisfying the requirements can be manufactured.

A second aspect of the present application provides a secondary battery, including the negative electrode plate of the first aspect of the present application.

A third aspect of the present application provides a battery module, including the secondary battery according to the second aspect of the present application.

A fourth aspect of the present application provides a battery pack, including the battery module according to the third aspect of the present application or the secondary battery according to the second aspect of the present application.

A fifth aspect of the present application provides an electric device, including at least one of the secondary battery according to the second aspect of the present application, the battery module according to the third aspect, or the battery pack according to the fourth aspect.

In embodiments of the present application, the negative electrode plate includes a current collector and a first active layer provided on a surface of the current collector; the first active layer includes a first active material and a second active material, and the specific surface area of the first active material is greater than that of the second active material; the current collector includes a first region and a second region which are provided in a first direction, the first active layer corresponding to the first region includes a first active material, and the first active layer corresponding to the second region includes a second active material; the first region is a region formed by the negative electrode plate protruding from a positive electrode plate in the first direction, and the second region is a region formed by the negative electrode plate overlapping with the positive electrode plate in the first direction. In this way, at the first active layer corresponding to the first region, the rate of consumption of lithium ions is high, and accordingly the concentration of lithium ions is low, thereby preventing lithium plating from occurring in the first region; in addition, at the first active layer corresponding to the second region, the rate of consumption of lithium ions is low, and accordingly the concentration of lithium ions is high, and there are more lithium ions which can be extracted from this region and enter the positive electrode, thereby enabling the battery to maintain good cycling stability. Therefore, the technical solution of the present application can maintain good cycling stability while avoiding lithium plating, facilitating the improvement of the performance of a battery.

### BRIEF DESCRIPTION OF DRAWINGS

Fig. 1 is a schematic diagram of lithium plating in an overhang region of a negative electrode in the related art.
Fig. 2 is a schematic diagram of a negative electrode plate according to an embodiment of the present application.
Fig. 3 is a schematic diagram of a negative electrode plate according to an embodiment of the present application.
Fig. 4 is a schematic diagram of a negative electrode plate according to an embodiment of the present application.
Fig. 5 is a schematic diagram of a negative electrode plate according to an embodiment of the present application.
Fig. 6 is a schematic diagram of a secondary battery according to an embodiment of the present application.
Fig. 7 is an exploded view of a secondary battery according to an embodiment of the present application.
Fig. 8 is a schematic diagram of a battery module according to an embodiment of the present application.
Fig. 9 is a schematic diagram of a battery pack according to an embodiment of the present application.
Fig. 10 is an exploded view of a battery pack according to an embodiment of the present application.
Fig. 11 is a schematic diagram of an electric device according to an embodiment of the present application.

### DETAILED DESCRIPTION OF EMBODIMENTS

The embodiments of a negative electrode plate, a secondary battery, a battery module, a battery pack, and an electric device according to the present application are specifically described as follows with reference to the drawings appropriately. However, unnecessary detailed description may be omitted. For example, the detailed description of well-known matters or repeated description of actually the same components may be omitted, which aims to prevent the following description from being unnecessarily redundant and to facilitate understanding by those skilled in the art. The drawings and the following description are provided for a person skilled in the art to sufficiently understand the present application, and are not intended to limit the subject matter defined in the claims.

The "range" disclosed in the present application is defined in terms of a lower limit and an upper limit, the given range is defined by selecting a lower limit and an upper limit, and the selected lower limit and upper limit define the boundaries of a particular range. The range defined in this manner may be inclusive or exclusive, and may be combined arbitrarily, that is, any lower limit may be combined with any upper limit to form a range. For example, if ranges of 60-120 and 80-110 are listed for a particular parameter, it is understood that ranges of 60-110 and 80-120 are also predicted. In addition, if the minimum range values of 1 and 2 are listed, and if the maximum range values of 3, 4, and 5 are listed, then the following ranges may all be predicted: 1-3, 1-4, 1-5, 2-3, 2-4, and 2-5. In the present application, unless otherwise indicated, the numerical range 'a-b' means an abbreviated representation of any combination of real numbers between a and b, where a and b are both real numbers. For example, the numerical range of "0-5" indicates that all real numbers between "0-5" have been listed in the text, and "0-5" is only an abbreviated representation of the combination of these numerical values. In addition, when a parameter as an integer ≥ 2 is expressed, it is equivalent to disclosing that the parameter is, for example, an integer such as 2, 3, 4, 5, 6, 7, 8, 9, 10, 11, 12...

All the embodiments and optional embodiments of the present application can be combined with each other to form a new technical solution unless otherwise specified.

Unless otherwise specified, all the technical features and optional technical features of the present application can be combined with each other to form a new technical solution.

Unless otherwise specified, all steps of the present application may be performed sequentially, or at random, preferably sequentially. For example, the method includes steps (a) and (b), indicating that the method can include steps (a) and (b) performed sequentially, and can also include steps (b) and (a) performed sequentially. For example, the mentioned method can also include step (c), indicating that step (c) can be added to the method in any order. For example, the method can include steps (a), (b) and (c), can also include steps (a), (c) and (b), can also include steps (c), (a) and (b), etc.

Unless otherwise specified, the terms "including" and "containing" are open-ended or closed-ended. For example, the terms "including" and "containing" can mean including or containing other components not listed, and can also mean only including or containing the listed components.

Unless otherwise specified, in the present application, the term "or" is inclusive. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

During charging and discharging of the lithium ion battery, the lithium ions are in a motion state from the positive electrode → the negative electrode → the positive electrode. When a lithium ion battery is charged, lithium ions are generated on the positive electrode of the battery, the generated lithium ions move to the negative electrode through an electrolyte, and the lithium ions reaching the negative electrode are inserted into the negative electrode. The more lithium ions are embedded in the negative electrode, the higher the charge capacity. When the battery is discharged (for example, when the electric device is discharged using the battery), lithium ions in the negative electrode are extracted, and move back to the positive electrode. The more lithium ions return to the positive electrode, the higher the discharge capacity. The capacity of a general battery refers to the discharge capacity.

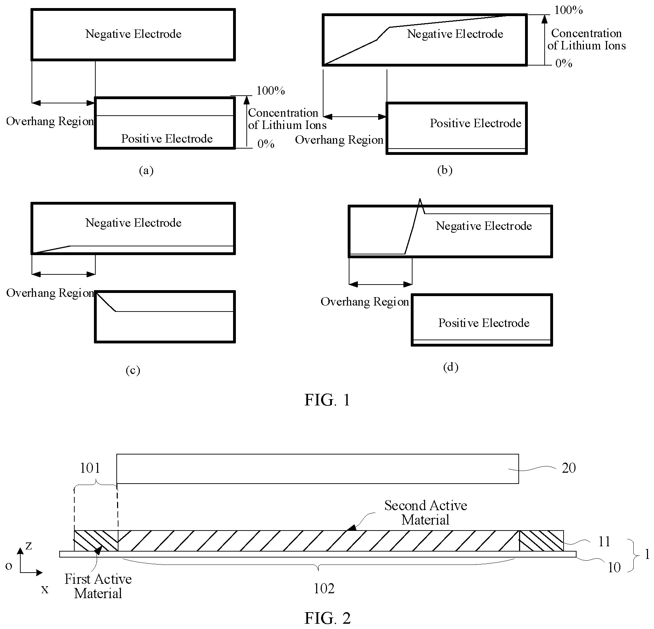

Fig. 1 is a schematic diagram of lithium plating in an overhang region of a negative electrode in the related art. Generally, the negative electrode plate is divided into an overhang region and a non-overhang region, where the overhang region is a region where the negative electrode plate protrudes from the positive electrode plate or a non-overlapping region between the negative electrode plate and the positive electrode plate, and the non-overhang region is an overlapping region between the negative electrode plate and the positive electrode plate, in which the negative electrode in the battery may also be referred to as an anode, and the positive electrode may also be referred to as a cathode.

As shown in (a) of Fig. 1, in the initial state, the lithium ion concentration in the negative electrode is low. During charging, lithium ions of the positive electrode move to the negative electrode and are inserted into the negative electrode. On the one hand, some of the lithium ions in the positive electrode can be inserted into an overhang region of the negative electrode, and on the other hand, lithium ions in a non-overhang region of the negative electrode diffuse at the edges, and move from the non-overhang region to the overhang region. During discharging, the lithium ions of the negative electrode are extracted and returned to the positive electrode. As shown in (c) of Fig. 1, due to the existence of the overhang region, the concentration of the lithium ions in the edge region of the overhang region of the positive electrode close to the negative electrode is higher than the concentration of the lithium ions in other regions of the positive electrode. During the subsequent charging, as shown in (d) of Fig. 1, as the concentration of the lithium ions in the edge region of the positive electrode is relatively high, the concentration of the lithium ions in regions close to the overhang region of the negative electrode is relatively high after the charging, so that lithium plating occurs at the edge of the overhang region or in the overhang region.

After multiple charging or quick charging cycles, a phenomenon of lithium plating occurs in the overhang region, and continuous accumulation of the plated lithium may cause the separator between the positive electrode and the negative electrode to be pierced, thereby affecting the safety performance of the battery. Therefore, how to solve the lithium plating problem of the negative electrode while maintaining good cycling stability so as to improve the performance of the battery is an urgent problem to be solved.

**In** view of this, the present application provides a negative electrode plate. By providing metal ions, for example, a material consuming lithium ions quickly, in an overhang region of the negative electrode plate, the concentration of the lithium ions in the overhang region is reduced, thereby avoiding lithium plating; in addition, a material consuming lithium ions slowly is provided in a non-overhang region of the negative electrode plate, so as to ensure the cycling stability of a battery.

### [Negative electrode plate]

Fig. 2 is a schematic diagram of a negative electrode plate according to an embodiment of the present application. As shown in Fig. 2, the present application provides a negative electrode plate 1, the negative electrode plate 1 includes a current collector 10 and a first active layer 11 provided on a surface of the current collector 10; the first active layer 11 includes a first active material and a second active material, and the specific surface area of the first active material is greater than that of the second active material; the current collector 10 includes a first region 101 and a second region 102 which are provided in a first direction, the first active layer 11 corresponding to the first region 101 includes a first active material, and the first active layer 11 corresponding to the second region 102 includes a second active material; the first region 101 is a region formed by the negative electrode plate 1 protruding from a positive electrode plate 20 in the first direction, and the second region 102 is a region formed by the negative electrode plate 1 overlapping with the positive electrode plate 20 in the first direction.

The first active layer 11 is provided on a surface of the current collector 10, that is, the first active layer 11 is provided on a surface of the current collector 10 with the largest surface area, i.e. the first active layer 11 is connected to a surface of the current collector 10 in the thickness direction of the negative electrode plate 1; the first active layer 11 may be directly connected to the current collector 10, and may also be indirectly connected to the current collector 10.

The first active layer 11 may be provided on either or both of the opposing surfaces of current collector 10.

The first active layer 11 includes a first active material and a second active material, in which the first active material is different from the second active material; the specific surface area of the first active material is greater than the specific surface area of the second active material; compared with the second active material, lithium ions in the first active material are more prone to side reactions, and more side reactions; therefore, more lithium ions are consumed, and the rate of consumption of the lithium ions is faster. Therefore, the concentration of lithium ions at the first active material is low, and lithium plating does not easily occur.

The current collector 10 includes a first region 101 and a second region 102 provided in a first direction, in which the first direction may be a width direction of the current collector 10, or may be a direction in which the negative electrode plates exceed the positive electrode plates; for a rectangular current collector, the width direction may be the direction of the shorter side of the current collector 10.

The first region 101 is a region in which the negative electrode plate 1 protrudes from the positive electrode plate 20 in the first direction, for example, the x direction in Fig. 2, a region in which the negative electrode plate 1 protrudes from positive electrode plate 20, that is, the first region 101 is a non-overlapping region between the negative electrode plate 1 and the positive electrode plate 20; the second region 102 is a region where the negative electrode plate 1 overlaps with the positive electrode plate 20 in the first direction.

The first active layer 11, corresponding to the first region 101, including the first active material may include the following conditions: for example, the first active layer 11 corresponding to the first region 101 only includes the first active material, i.e. the first active layer 11 corresponding to the first region 101 is the regions of the first active material; another example, the first active layer 11 corresponding to the first region 101 includes a first active material and a second active material, i.e. the first active layer 11 corresponding to the first region 101 includes the regions of the first active material and the regions of the second active material. In the first active layer 11 corresponding to the first region 101, the mass ratio of the first active material to the second active material is not specifically limited, and the mass ratio of the first active material to the first active layer 11 may be greater than, equal to, or less than the mass ratio between the second active material and the first active layer 11.

Similarly, the first active layer 11 corresponding to the second region 102 includes the second active material, and other different situations may also be included, that is, the first active layer 11 corresponding to the second region 102 may only include the second active material, and may also include the second active material and the first active material. In the first active layer 11 corresponding to the second region 102, the mass ratio of the first active material to the second active material is not specifically limited, and the mass ratio of the first active material to the first active layer 11 may be greater than, equal to, or less than the mass ratio of the second active material to the first active layer 11.

The first active layer 11 corresponding to the first region 101 includes a first active material, and the first active layer 11 corresponding to the second region 102 includes a second active material. As the first active material consumes lithium ions more easily, the concentration of lithium ions is low at the first active layer 11 corresponding to the first region 101, and lithium plating does not easily occur. The second active material consumes fewer lithium ions than the first active material, and the concentration of lithium ions in the second active material is higher; therefore, more lithium ions can be extracted from the second active material and enter the positive electrode, and the second active material has better cycle performance and lower capacity attenuation. By providing the first active material in the first active layer 11 corresponding to the first region 101 and providing the second active material in the first active layer 11 corresponding to the second region 102, lithium plating in the first region 101 can be avoided, and the cycling stability of the battery can also be achieved.

In the embodiments of the present application, the negative electrode plate includes a current collector 10 and a first active layer 11 provided on a surface of the current collector 10; the first active layer 11 includes a first active material and a second active material, and the specific surface area of the first active material is greater than that of the second active material; the current collector 10 includes a first region 101 and a second region 102 which are provided in a first direction, the first active layer 11 corresponding to the first region 101 includes a first active material, and the first active layer 11 corresponding to the second region 102 includes a second active material; the first region 101 is a region formed by the negative electrode plate 1 protruding from a positive electrode plate in the first direction, and the second region 102 is a region formed by the negative electrode plate overlapping with the positive electrode plate in the first direction. In this way, at the first active layer 11 corresponding to the first region 101, the rate of consumption of lithium ions is high, and accordingly, the concentration of lithium ions is low, which can prevent lithium plating from occurring at the first region 101; in addition, at the first active layer 11 corresponding to the second region 102, the rate of consumption of lithium ions is low, and accordingly, the concentration of lithium ions is high, and more lithium ions can be extracted from the first active layer and enter the positive electrode, thereby enabling the battery to maintain good cycling stability. Therefore, the technical solution of the present application can maintain good cycling stability while avoiding lithium plating, facilitating the improvement of the performance of a battery.

In some embodiments, the specific surface area of the first active material is 1.5-25 m²/g, and the specific surface area of the second active material is 0.1-2 m²/g. In this way, both the specific surface area of the first active material and the specific surface area of the second active material belong to an appropriate range, and both the safety performance and cycling stability performance of the battery can be achieved. The specific surface area of the active substance powder can be determined by means of the gas adsorption BET method, and the standard detection is performed according to document GB/T 19587/2017.

In some embodiments, the mass ratio of the first active material to the second active material in the first active layer 11 corresponding to the first region 101 is greater than 1, and the mass ratio of the first active material to the second active material in the first active layer 11 corresponding to the second region 102 is less than 1.

In the first active layer 11 corresponding to the first region 101, the mass ratio of the first active material is greater than the mass ratio of the second active material, the concentration of lithium ions is relatively low, and lithium plating does not occur at the first region 101; in the first active layer 11 corresponding to the second region 102, the mass ratio of the second active material is greater than the mass ratio of the first active material; in this way, the amount of lithium ions consumed in the first active layer 11 corresponding to the second region 102 is relatively small, and during discharging, the amount of lithium ions that can be extracted from the first active layer 11 corresponding to the second region 102 and enter the positive electrode is relatively large; therefore, the retention ratio of the discharge capacity of the first active layer 11 corresponding to the second region 102 is relatively high. In addition, as the second region has a larger area than the first region, the first active layer 11 can maintain a higher discharge capacity, i.e. the battery can achieve good cycling stability.

Optionally, the first active layer 11 corresponding to the first region 101 only includes the first active material, and does not include the second active material.

Optionally, the first active layer 11 corresponding to the second region 102 only includes the second active material, and does not include the first active material.

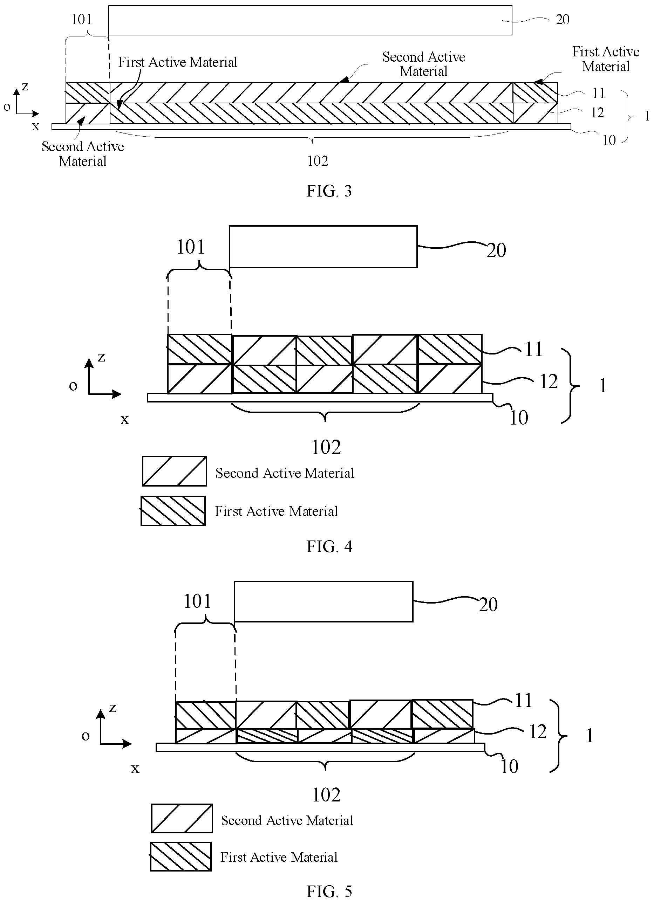

Fig. 3 is a schematic diagram of a negative electrode plate according to an embodiment of the present application. In some embodiments, as shown in Fig. 3, the negative electrode plate 1 further includes a second active layer 12. The second active layer 12 is located between the first active layer 11 and the current collector 10, the second active layer 12 includes a first active material and a second active material, the second active layer 12 corresponding to the first region 101 includes a second active material, and the second active layer 12 corresponding to the second region 102 includes a first active material.

In the thickness direction of the current collector 10, i.e. the z direction, the second active layer 12 is located between the first active layer 11 and the current collector 10, that is, the second active layer 12 is away from the positive electrode plate 20 relative to the first active layer 11.

The second active layer 12 corresponding to the first region 101 includes the second active material, and the second active layer 12 corresponding to the second region 102 includes the first active material. For example, as shown in Fig. 3, in the first region 101, in the z direction, the regions of the first active material and the regions of the second active material are distributed alternately, and the regions of the first active material are close to the positive electrode plate 20 relative to the regions of the second active material. In this way, lithium plating in the first region 101 can be avoided, and the concentration of lithium ions in the first region 101 can be balanced, thereby helping to improve the cycling stability of the battery. Similarly, in the second region 102, the regions of the first active material and the regions of the second active material are distributed alternately, and the regions of the second active material are close to the positive electrode plate 20 relative to the regions of the first active material, which helps to balance the concentration of lithium ions in the second region 102, thereby helping to improve the cycling stability of the battery.

In some embodiments, the ratio of the second active material to the first active material in the second active layer 12 corresponding to the first region 101 is greater than 1, and the ratio of the second active material to the first active material in the second active layer 12 corresponding to the second region 102 is less than 1. In this way, as a whole, the first active layer 11 and the second active layer 12 are taken as a whole, the mass proportions of the first active material and the second active material contained therein are substantially the same, so that the safety performance and cycling stability of the battery can be achieved at the same time.

Optionally, the second active layer 12 corresponding to the first region 101 only includes the second active material, and does not include the first active material.

Optionally, the second active layer 12 corresponding to the second region 102 only includes the first active material, and does not include the second active material.

Fig. 4 is a schematic diagram of a negative electrode plate according to an embodiment of the present application. In some embodiments, as shown in Fig. 4, the regions of the first active material and the regions of the second active material are distributed alternately. In this way, the first active material and the second active material in the negative electrode plate 1 are distributed more evenly, which helps improve performance of the negative electrode plate 1.

In the first direction, the x direction in Fig. 4, the size of the regions of the first active material and the size of the regions of the second active material may be specifically set according to an actual requirement, for example, according to a required capacity retention ratio after cycling.

In some embodiments, the capacity per gram of the regions of the first active material is larger than the capacity per gram of the regions of the second active material.

The regions of the first active material may refer to the regions in which the active material is the first active material, and the regions are formed by being coated with a slurry containing the first active material and subjected to processes such as drying.

The regions of the second active material may refer to the regions in which the active material is the second active material, and the regions are formed by being coated with a slurry containing the second active material and subjected to processes such as drying.

In some embodiments, the capacity per gram of the first active material is greater than the capacity per gram of the second active material, in which
the capacity per gram may be the capacity per gram of region of active material or active material, and the larger the capacity per gram, the higher the energy density of the region or the material, the longer the use time or service life of the region or the material.

As the rate of consumption of lithium ions of the first active material is greater than that of the second active material, by setting the capacity per gram of the regions of the first active material to be larger than the capacity per gram of the regions of the second active material, the problem that the capacity of the regions of the first active material decreases too much due to excessive consumption of lithium ions can be solved to some extent, and in addition, the service life of the regions of the first active material is prolonged, thereby balancing the service life of the regions of the first active material and the service life of the regions of the second active material.

In some embodiments, the capacity per gram of the regions of the first active material is 300-1500 mAh g⁻¹, and the capacity per gram of the regions of the second active material is 200-400 mAh g⁻¹. In this way, the capacity of the regions of the first active material and the regions of the second active material is in an appropriate range, which helps to balance the service life of the two types of regions, thereby helping to improve the performance of the negative electrode plate. The capacity per gram can be obtained by manufacturing an active substance into a positive electrode plate, assembling same into a lithium battery with a negative electrode being metallic lithium, performing charging and discharging, and taking the capacity per gram for discharging.

In some embodiments, the porosity of the regions of the first active material is smaller than the porosity of the regions of the second active material. In this way, lithium ions are more easily diffused in the regions of the second active material, and the rate at which the lithium ions are inserted into the regions of the second active material is greater than the rate at which the lithium ions are inserted into the regions of the first active material, so that lithium plating does not occur at the first active layer 11 corresponding to the second region 102.

In some embodiments, the porosity of the regions of the first active material is 5-25%, and the porosity of the regions of the second active material is 15-50%. In this way, the ion diffusion rate of the second region 102 can be increased.

The porosity of the regions of the first active material may be a ratio of a total volume of the pores of the first active material to a volume of the regions of the first active material. For example, in the regions of the first active material, when the first active material is natural graphite, the porosity is the ratio of the total volume of pores in the natural graphite to the volume of the regions of the first active material. The porosity of the region of the second active material may be a ratio of a total volume of the pores of the second active material to a volume of the regions of the first active material. The porosity can be measured according to GB/T 24586-2009, and in order to measure the porosity of different material regions, only the region to be measured can be retained for measurement by means of cutting and thinning methods.

In some embodiments, the adhesive force between the regions of the first active material and the current collector 10 is greater than the adhesive force between the regions of the second active material and the current collector 10. The adhesive force in different regions of the pole piece can be obtained by measuring with a pulling machine: cutting a specific region from the pole piece and adhering same to an adhesive tape; using the pulling machine to pull the pole piece from the adhesive tape and make the pole piece fall off; and the pulling machine recording the pulling force, so as to calculate the adhesive force of the region. The measured adhesive force is the adhesive force of the pole piece of the layer closest to the current collector.

The adhesive force between the regions of the first active material and the current collector 10 is greater than the adhesive force between the regions of the second active material and the current collector 10. In the second region 102, in cases where the proportion of the first active material in the second active layer 12 is greater than that of the second active material, the adhesive force between the second active layer 12 and the current collector 10 is strong, and in a subsequent use process, the second active layer 12 is unlikely to fall off the current collector 10.

In any embodiment, the adhesive force between the regions of the first active material and the current collector 10 is 10-30 N/m, and the adhesive force between the regions of the second active material and the current collector 10 is 0-15 N/m. In this way, the adhesive force between the first active layer 11 and/or the second active layer 12 and the current collector 10 is strong, so that the first active layer 11 and/or the second active layer 12 are unlikely to fall off the current collector 10.

Fig. 5 is a schematic diagram of a negative electrode plate according to an embodiment of the present application. In some embodiments, as shown in Fig. 5, the thickness of the first active layer 11 is greater than the thickness of the second active layer 12. As the thickness of the first active layer 11 is greater than the thickness of the second active layer 12, more first active materials are included in the first active layer 11 in the first region 101, and accordingly, more lithium ions are consumed in the first active layer 11 corresponding to the first region 101, so that the concentration of the lithium ions is lower, further reducing the risk of lithium plating in the first region 101 of the first active layer 11.

Alternatively, the thickness of the first active layer 11 is 60 µm, and the thickness of the second active layer 12 is 20 µm. The thickness of the first active layer 11 and the thickness of the second active layer 12 may be specifically set according to actual requirements, which is not specifically limited in the present application.

In some embodiments, the regions of the first active material in the first active layer 11 are aligned with the regions of the second active material in the second active layer 12. In this way, in the process of manufacturing the first active layer 11 and the second active layer 12, it is convenient to form the first active layer 11 and the second active layer 12 by means of a primary process, which helps to reduce processes.

In some embodiments, the first active layer 11 and/or the second active layer 12 further include an adhesive and a conductive agent. In this way, it is convenient to bond the first active layer 11 and/or the second active layer 12 to a surface of the current collector 10, and furthermore, the conductivity of the negative electrode plate 1 is improved.

In some embodiments, the first active material and the second active material are selected from at least one of: natural graphite, artificial graphite, soft carbon, hard carbon, silicon-based materials, and a metal oxide.

The silicon-based material may be selected from at least one of elemental silicon, a silicon-oxygen compound, a silicon-carbon composite, a silicon-nitrogen composite, and a silicon alloy. The active material may also be selected from tin-based materials, lithium titanate, etc. The tin-based material may be selected from at least one of elemental tin, a tin oxygen compound, and a tin alloy.

In some embodiments, the first active material is natural graphite. In this way, the high capacity, low porosity, and high adhesive force of the first active material can be achieved.

In some embodiments, the second active material is artificial graphite. In this way, the low capacity, high porosity, and low adhesive force of the second active material can be achieved.

In some embodiments, the conductive agent is selected from at least one of conductive carbon black, acetylene black, small-particle conductive carbon black, ketjen black, graphene, carbon nanotubes, carbon fibers, and conductive graphite. In this way, the requirement of the negative electrode plate 1 for electrical conductivity can be satisfied.

In some embodiments, the adhesive is selected from at least one of sodium carboxymethyl cellulose, sodium alginate, gelatin, styrene-butadiene rubber, polyvinylidene fluoride, a copolymer of vinylidene fluoride hexafluoropropylene, polyamide, polyacrylonitrile, polyacrylate, polyacrylic acid, polyacrylate, polytetrafluoroethylene and chitosan. In this way, the requirements of the adhesive force between the first active layer 11 and the second active layer 12 and the current collector 10 can be satisfied.

In some embodiments, the regions of the first active material are formed by a first active slurry coated on a surface of the current collector 10, the first active slurry including natural graphite, conductive carbon black, sodium carboxymethyl cellulose, and styrene butadiene rubber in a mass ratio of 96:2: 1: 1. In this way, the regions of the first active material satisfying the requirements can be produced by the first active slurry.

Optionally, the first active slurry may have a total solid content of 50 wt% and a viscosity of 4000 mPa. S.

In some embodiments, the regions of the second active material are formed by a second active slurry coated on a surface of the current collector 10, the second active slurry including artificial graphite, conductive carbon black, sodium carboxymethyl cellulose, and styrene butadiene rubber in a mass ratio of 96:2: 1: 1. In this way, regions of the second active material satisfying the requirements can be produced by the second active slurry.

Optionally, the second active slurry may have a total solid content of 50 wt% and a viscosity of 4500 mPa. s.

In some embodiments, the current collector 10 may use a metal foil or a composite current collector. For example, a copper foil can be used as the metal foil. The composite current collector may include a polymer material base layer and a metal layer formed on at least one surface of the polymer material base. The composite current collector may be formed by forming metal materials (copper, copper alloy, nickel, nickel alloy, titanium, titanium alloy, silver, silver alloy, and the like) on a high molecular material substrate (such as a substrate of polypropylene (PP), polyethylene terephthalate (PET), polybutylene terephthalate (PBT), polystyrene (PS), polyethylene (PE), and the like).

Hereinafter, a secondary battery, a battery module, a battery pack, and an electric device according to the present invention are described as follows with reference to the accompanying drawings appropriately.

In an embodiment of the present application, a secondary battery is provided.

Typically, the secondary battery includes a positive electrode plate, a negative electrode plate, an electrolyte, and a separator. During charging and discharging of the battery, active ions are inserted and extracted back and forth between the positive electrode plate and the negative electrode plate. The electrolyte serves to conduct ions between the positive electrode plate and the negative electrode plate. The separator is provided between the positive electrode plate and the negative electrode plate, and mainly serves to prevent the positive and negative electrodes from short-circuiting, and can also allow ions to pass through.

### [Positive electrode plate]

The positive electrode plate includes a positive electrode current collector and a positive electrode film layer provided on at least one surface of the positive electrode current collector, and the positive electrode film layer includes the positive electrode active material according to the first aspect of the present application.

As an example, the positive electrode current collector has two surfaces opposing in a thickness direction thereof, and the positive electrode film layer is provided on any one or both of the two opposing surfaces of the positive electrode current collector.

In some embodiments, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive electrode active material may be a positive electrode active material known in the art for batteries. As an example, the positive electrode active material may include at least one of lithium-containing phosphates of an olivine structure, lithium transition metal oxides, and respective modified compounds thereof. However, the present application is not limited to these materials, and other conventional materials that can be used as a positive electrode active material of a battery can also be used. These positive electrode active materials may be used alone or in combination of two or more kinds thereof. Examples of the lithium transition metal oxide may include, but are not limited to, lithium cobalt oxide (for example, LiCoO2), lithium nickel oxide (for example, LiNiO2), lithium manganese oxide (for example, LiMnO2, LiMn2O4), lithium nickel cobalt oxide, lithium manganese cobalt oxide, lithium nickel manganese oxide, lithium nickel cobalt manganese oxide (for example, LiNi1/3Co1/3Mn1/3O2 (also called as NCM333 for short), LiNi0.5Co0.2Mn0.3O2 (also called as NCM523 for short), LiNi0.5Co0.25Mn0.25O2 (also called as NCM211 for short), LiNi0.6Co0.2Mn0.2O2 (also called as NCM622 for short), LiNi0.8Co0.1Mn0.1O2 (also called as NCM811 for short), lithium nickel cobalt aluminum oxide (such as LiNi0.85Co0.15A10.05O2), and at least one of the modified compounds thereof. Examples of the lithium-containing phosphate of an olivine structure may include, but are not limited to, at least one of lithium iron phosphate (such as LiFePO4 (also called as LFP for short)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the positive electrode film layer also optionally includes an adhesive. As an example, the adhesive may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode plate can be manufactured in the following manner: dispersing the described components for manufacturing the positive electrode plate, such as the positive pole active material, the conductive agent, the adhesive and any other components, in a solvent (such as N-methyl pyrrolidone) to form a positive electrode slurry; coating the positive electrode slurry on a positive electrode current collector; and after the processes such as drying and cold pressing, obtaining the positive electrode plate.

### [Electrolyte]

The electrolyte serves to conduct ions between the positive electrode plate and the negative electrode plate. The present application does not specifically limit the type of the electrolyte, which can be selected according to requirements. For example, the electrolyte may be in a liquid state, a gel state, or an all-solid state.

In some embodiments, the electrolyte uses an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethylsulfonyl)imide, lithium trifluoromethanesulfonate, lithium difluorophosphate, lithium difluorooxalate borate, lithium dioxalate borate, lithium difluorodioxalate phosphate, and lithium tetrafluorooxalate phosphate.

In some embodiments, the solvent may be selected from at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte also optionally includes an additive. For example, the additive may include a negative electrode film forming additive and a positive electrode film forming additive, and can further include an additive capable of improving certain properties of the battery, for example, an additive capable of improving overcharging properties of the battery, an additive capable of improving high temperature or low temperature properties of the battery, and the like.

### [Separator]

In some embodiments, the secondary battery further includes a separator. The type of the separator is not particularly limited in the present application, and any known separator of a porous structure having good chemical stability and mechanical stability can be selected.

In some embodiments, the material of the separator may be selected from at least one of glass fiber, non-woven fabric, polyethylene, polypropylene and polyvinylidene fluoride. The separator may be a single-layer thin film or a multi-layer composite thin film, which is not particularly limited. When the separator is a multi-layer composite film, the material of each layer may be the same or different, which is not particularly limited.

In some embodiments, the positive electrode plate, the negative electrode plate, and the separator may be fabricated into an electrode assembly by a winding process or a lamination process.

In some embodiments, the secondary battery may include an outer package. The outer package can be used for packaging the described electrode assembly and the electrolyte.

In some embodiments, the outer package of the secondary battery may be a hard housing, such as a hard plastic housing, an aluminum housing, a steel housing, etc. The outer package of the secondary battery may be a flexible bag, for example, a bag-type flexible bag. The material of the flexible bag may be plastic, and examples of the plastic include polypropylene, polybutylene terephthalate, and polybutylene succinate, etc.

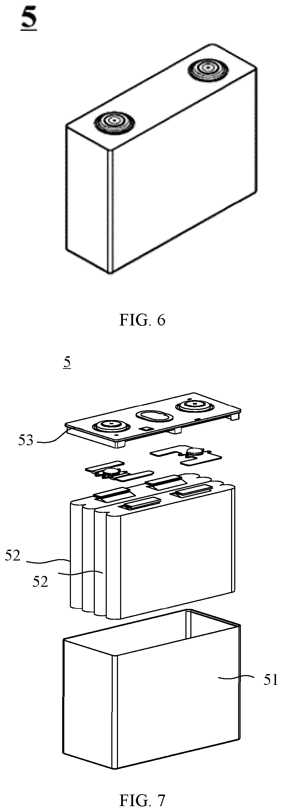

There is no particular limitation on the shape of the secondary battery in the present application, which may be cylindrical, square or any other arbitrary shape. For example, Fig. 6 is a square-structured secondary battery 5 as one example.

In some embodiments, referring to Fig. 7, the outer package may include a housing 51 and a cover plate 53; the housing 51 may include a bottom plate and a side plate connected to the bottom plate, and the bottom plate and the side plate are enclosed to form an accommodating cavity; and the housing 51 has an opening in communication with the accommodating cavity, and the cover plate 53 can cover the opening so as to close the accommodating cavity. The positive electrode plate, the negative electrode plate, and the separator may be subjected to a winding process or a lamination process to form an electrode assembly 52. The electrode assembly 52 is packaged in the accommodating cavity. The electrolytic solution is impregnated in the electrode assembly 52. One or more electrode assembly 52 can be contained in the secondary battery 5, and a person skilled in the art would have been able to make a selection according to practical requirements.

In some embodiments, the secondary battery can be assembled into a battery module, one or more secondary battery can be contained in the battery module, and a person skilled in the art would have been able to choose the specific number thereof according to the application and capacity of the battery module.

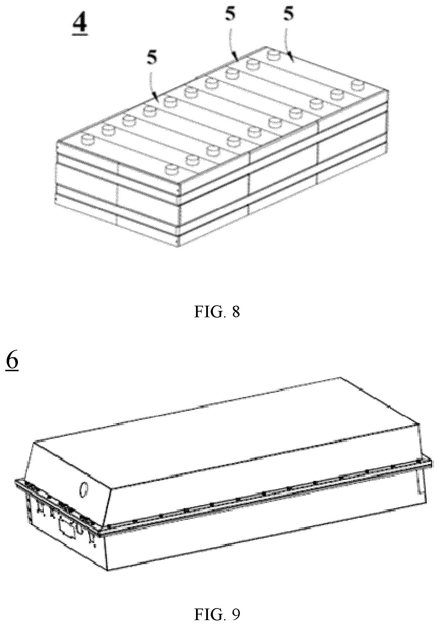

Fig. 8 shows a battery module 4 as an example. Referring to Fig. 8, in the battery module 4, a plurality of secondary batteries 5 may be sequentially arranged in a length direction of the battery module 4. Of course, they may also be arranged in any other manner. The plurality of secondary batteries 5 may be fixed by fastening members.

Alternatively, the battery module 4 may further include a housing having an accommodating space in which the plurality of secondary batteries 5 are accommodated.

In some embodiments, the described battery module can also be assembled into a battery pack, one or more battery module can be contained in the battery pack, and a person skilled in the art would have been able to choose the specific number thereof according to the application and capacity of the battery pack.

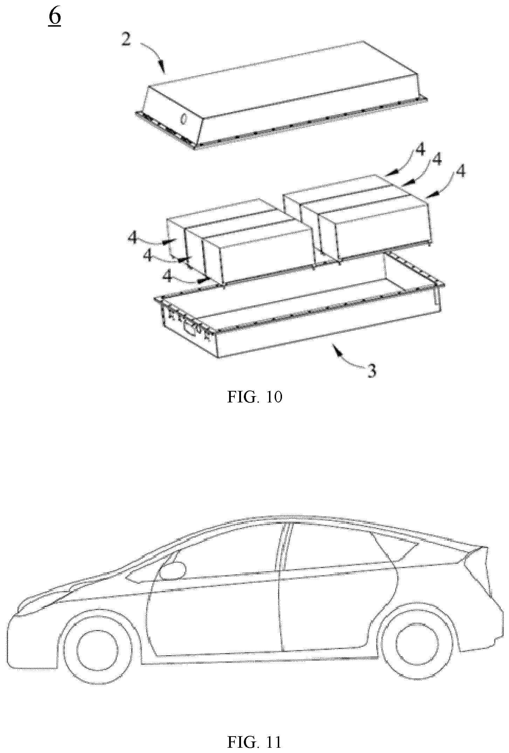

Figs. 9 and 10 show a battery pack 6 as an example. Referring to Figs. 9 and 10, a battery box and a plurality of battery modules 4 provided in the battery box may be included in the battery pack 6; the battery box includes an upper box body 2 and a lower box body 3, in which the upper box body 2 can cover the lower box body 3 and form an enclosed space for accommodating the battery modules 4; and the plurality of battery modules 4 may be arranged in the battery box in an arbitrary manner.

In addition, the present application further provides an electric device; the electric device includes at least one of the secondary battery, the battery module, or the battery pack provided in the present application; the secondary battery, the battery module, or the battery pack may be used as a power supply of the electric device, and may also be used as an energy storage unit of the electric device; the electric device may include a mobile device (for example, a mobile phone, a notebook computer, and the like), an electric vehicle (for example, a pure electric vehicle, a hybrid electric vehicle, a plug-in hybrid electric vehicle, an electric bicycle, an electric scooter, an electric golf cart, an electric truck, and the like), an electric train, a ship and a satellite, an energy storage system, and the like, but is not limited thereto.

As the electric device, the secondary battery, the battery module, or the battery pack may be selected according to the use requirements thereof.

Fig. 11 is an electric device as an example. The electric device is a pure electric vehicle, a hybrid electric vehicle, or a plug-in hybrid electric vehicle. In order to satisfy the requirements of the electric device for the high power and high energy density of the secondary battery, a battery pack or a battery module may be used.

As another example, the device may be a cell phone, tablet, laptop, etc. This device is generally required to be light and thin, and a secondary battery can be used as a power supply thereof.

### EMBODIMENTS

Hereinafter, the embodiments of the present application are described. The embodiments described below are exemplary, which are only used to explain the present application, but not to limit the present application. Specific techniques or conditions, which are not mentioned in the embodiments, are performed according to techniques or conditions described in documents in the art or according to product specifications. The reagents or instruments used, of which the manufacturers are not noted, are all conventional products that can be obtained by means of general purchase.

In embodiments 1 to 4, the specific arrangement of the negative electrode plate 1 is as shown in Table 1.

**Table 1: specific parameters of the first active layer in embodiments 1-4**

| Embodiments | a1 | a2 | b1 | b2 |
|---|---|---|---|---|
| 1 | 0.9 | 0.1 | 0.1 | 0.9 |
| 2 | 0.3 | 0.7 | 0.7 | 0.3 |
| 3 | 0.5 | 0.5 | 0.5 | 0.5 |
| 4 | 1 | 0 | 0 | 1 |

In embodiments 1 to 4, the negative electrode plate 1 includes a current collector 10 and a first active layer 11 provided on the current collector 10; the first active layer 11 includes a first active material and a second active material; in the first active layer 11 corresponding to the first region 101, the mass ratio of the first active material to the first active layer is a1, and the mass ratio of the second active material to the first active layer is a2; in the first active layer 11 corresponding to the second region 102, the mass ratio of the first active material to the first active layer is b1, and the mass ratio of the second active material to the second active layer is b2; the specific surface area of the first active material is 3.0m²/g, and the specific surface area of the second active material is 0.8m². Natural graphite is selected as the first active material, and artificial graphite is selected as the second active material. For a specific structure of embodiment 4, reference may be made to the structure shown in Fig. 2.

Table 2 shows specific parameters of the first active layer in embodiments 5 to 7. As shown in Table 2, embodiments 5 to 7 differ from embodiment 4 in that: the specific surface areas of the first active material and the second active material. The specific surface area of the first active material is c1 in m²/g, and the specific surface area of the second active material is c2 in m²/g. Natural graphite is selected as the first active material. The specific surface area of the natural graphite is mainly determined by the preparation process and the particle size. The more the sheet graphite in the produced graphite particles is retained, the larger the specific surface area is. Artificial graphite is selected as the active material for the second active material, the specific surface area of the artificial graphite is mainly determined by the particle size, and materials with different particle sizes can be used.

**Table 2: specific parameters of the first active layer in embodiments 5 to 7**

| Embodiments | c1 | c2 |
|---|---|---|
| 5 | 2 | 0.5 |
| 6 | 5 | 1.0 |
| 7 | 23 | 2 |

Table 3 shows the specific parameters of the second active layer in embodiments 8 to 11. In embodiments 8 to 11, the negative electrode plate 1 includes a current collector 10, and a second active layer 12 and a first active layer 11 sequentially provided on a surface of the current collector 10. In the first active layer 11, the first active layer 11 corresponding to the first region 101 is made of the first active material entirely, and the first active layer corresponding to the second region 102 is made of the second active material entirely. In the second active layer 12, in the second active layer 12 corresponding to the first region 101, the mass ratio of the first active material to the first active layer is d1, and the mass ratio of the second active material to the second active layer is d2; and in the second active layer 12 corresponding to the second region 102, the mass ratio of the first active material to the first active layer is e1, and the mass ratio of the second active material to the second active layer is e2; and the specific surface area of the first active material is 3.0m²/g, and the specific surface area of the second active material is 0.8m². Natural graphite is selected as the first active material, and artificial graphite is selected as the second active material. For a specific structure in embodiment 11, reference may be made to Fig. 3.

**Table 3: specific Parameters of the second active layer in embodiments 8 to 11.**

| Embodiments | d1 | d2 | e1 | e2 |
|---|---|---|---|---|
| 8 | 0.1 | 0.9 | 0.9 | 0.1 |
| 9 | 0.7 | 0.3 | 0.3 | 0.7 |
| 10 | 0.5 | 0.5 | 0.5 | 0.5 |
| 11 | 0 | 1 | 1 | 0 |

In embodiments 1 to 11, the capacity per gram f1 of the regions of the first active material is 370 mAh g g⁻¹, the capacity per gram f2 of the regions of the second active material is 310 mAh g⁻¹, the porosity g1 of the regions of the first active material is 25%, the porosity g2 of the regions of the second active material is 35%, the adhesive force h1 between the regions of the first active material and the current collector is 14 N/m, and the adhesive force h2 between the regions of the second active material and the current collector is 7 N/m.

Table 4 shows concrete parameters of the regions of the first active material and the regions of the second active material in embodiments 12 and 13. Embodiments 12 and 13 differ from embodiment 11 in that specific parameters of the regions of the first active material and the regions of the second active material are different, i.e. specific performances of the first active material and the second active material are different. In embodiment 12, a mixture of natural graphite and silicon is selected as the first active material, the graphite accounting for 65%, and artificial graphite is selected as the second active material. In embodiment 13, a mixture of natural graphite and silicon is selected as the first active material, the graphite accounting for 30%, and a mixture of artificial graphite and silicon is selected as the second active material, the graphite accounting for 90%.

**Table 4: specific parameters in embodiments 12 and 13**

| Embodiments | f1 / mAh g⁻¹ | f2 / mAh g⁻¹ | g1 | g2 | h1 /N/m | h2 /N/m |
|---|---|---|---|---|---|---|
| 12 | 700 | 230 | 10% | 20% | 20 | 10 |
| 13 | 1200 | 400 | 25% | 50% | 30 | 15 |

### Embodiment 14

Embodiment 14 differs from embodiment 11 in that, in the first active layer 11 and the second active layer 12 corresponding to the second region 102, the regions of the first active material and the regions of the second active material are distributed alternately. Referring to Fig. 4, the negative electrode plate 1 includes a current collector 10, and a second active layer 12 and a first active layer 11 sequentially provided on a surface of the current collector 10. In the x-direction, the total length of the first 101 and second 102 regions of the current collector 10 is 100 mm. In the first active layer 11, there are, from left to right, a region of the first active material of 20 mm, a region of the second active material of 20 mm, a region of the first active material of 20 mm, a region of the second active material of 20 mm, a region of the first active material of 20 mm in sequence. In the second active layer 12, there are, from left to right, a region of the second active material of 20 mm, a region of the first active material of 20 mm, a region of the second active material of 20 mm, a region of the first active material of 20 mm, a region of the second active material of 20 mm in sequence. The thickness of both the first active layer 11 and the second active layer 12 is 40 µm.

### Embodiment 15

Embodiment 15 differs from Embodiment 11 in the thickness of the first active layer 11 and the second active layer 12, and in the size of the region of the first active material and the size of the region of the second active material in the first active layer 11 and the second active layer 12. For the structure of embodiment 15, reference may be made to Fig. 5.

In the first active layer 11, there are, from left to right, a region of the first active material of 10 mm, a region of the second active material of 35 mm, a region of the first active material of 10 mm, a region of the second active material of 35 mm, a region of the first active material of 10 mm in sequence. In the second active layer 12, there are, from left to right, a region of the second active material of 10 mm, a region of the first active material of 35 mm, a region of the second active material of 10 mm, a region of the first active material of 35 mm, and a region of the second active material of 10 mm. The thickness of the first active layer 11 is 60 µm, and the thickness of the second active layer 12 is 20 µm.

### [Regions of the first active material]

The first active material is natural graphite or a mixture of natural graphite and silicon, and the process of preparing the regions of the first active material is as follows:

weighing natural graphite or natural graphite and silicon, conductive carbon black, sodium carboxymethyl cellulose and styrene-butadiene rubber according to a mass ratio of 96:2:1:1, adding same into water and stirring same, and uniformly mixing same to obtain a first active slurry, the total solid content of the first activated slurry being 50 wt% and the viscosity of the slurry being 4000 mPa·s.

### [Regions of the second active material]

The second active material is artificial graphite or a mixture of artificial graphite and silicon, and the process of preparing the regions of the second active material is as follows:

weighing artificial graphite or artificial graphite and silicon, conductive carbon black, sodium carboxymethyl cellulose and styrene-butadiene rubber according to a mass ratio of 96:2:1:1, adding same into water and stirring same, and uniformly mixing same to obtain a second active slurry, the total solid content of the second activated slurry being 50 wt% and the viscosity of the slurry being 4500 mPa s.

### [Method for manufacturing the negative electrode plate]

With regard to a negative electrode plate including a first active layer and a second active layer, a first active slurry and a second active slurry are coated on a common copper foil (a current collector) with a thickness of 8 µm using an extrusion-type coating machine having two layers of cutter heads, and each layer of cutter heads is designed separately, so that the regions of the first active material and the regions of the second active material finally obtained by coating are films which are vertically distributed in two layers and are transversely distributed alternately. After coating, drying, cold pressing, and cutting are performed to obtain the negative electrode plate.

With regard to a negative electrode plate only including a first active layer, a first active slurry is coated on a common copper foil (current collector) 8 µm thick by using an extrusion-type coating machine, and after coating, drying, cold pressing and cutting are performed to obtain the negative electrode plate.

### Comparative Embodiment 1

The difference between comparative embodiment 1 and embodiment 1 lies in that the active layers provided on the copper foil are all made of the first active material, and the active layers have a size of 100 mm and a thickness of 80 µm in a first direction.

### Comparative Embodiment 2

The difference between comparative embodiment 2 and embodiment 1 lies in that the active layers provided on the copper foil are all made of the second active material, and the active layers have a size of 100 mm and a thickness of 80 µm in a first direction.

### Comparative Embodiment 3

Comparative embodiment 3 differs from embodiment 15 in that the first active layer and the second active layer in comparative embodiment 3 are arranged in the positions opposite to those in embodiment 2.

In comparative embodiment 3, the active layer (the active layer close to the copper foil) in contact with the copper foil is arranged as: from left to right, a region of the first active material of 10 mm, a region of the second active material of 35 mm, a region of the first active material of 10 mm, a region of the second active material of 35 mm, and a region of the first active material of 10 mm in sequence, and the thickness of the active layer is 20 µm;
the active layer not in contact with the copper foil (the active layer close to the positive electrode plate) is arranged as: from left to right, a region of a second active material of 10 mm, a region of a first active material of 35 mm, a region of a second active material of 10 mm, a region of the first active material of 35 mm and a region of the second active material of 10 mm in sequence, and the thickness of the active layer is 60 µm.

The negative electrode plate obtained in the described embodiments 1-15 and comparative embodiments 1-3 are manufactured into a lithium ion battery and a sodium ion battery for performance tests. The test results are shown in Table 5.

Manufacturing a lithium ion battery:
successively stacking a lithium iron phosphate positive electrode plate, a separator and the described negative electrode plate, and winding same to obtain a dry cell, in which the edge of the negative electrode plate exceeds the positive electrode plate by at least 4 mm (i.e. the size of each first region is at least 4 mm), and the positive electrode and the negative electrode are separated by the separator; placing the entire dry cell in an aluminum plastic film, and then injecting an electrolytic solution; and obtaining the lithium ion battery by means of forming, degassing and packaging processes.

### (2) Manufacturing a sodium ion battery

### [Regions of a first active material]

The first active material is hard carbon or a mixture of hard carbon and tin oxide, and the process of manufacturing regions of the first active material is as follows:
weighing natural graphite, conductive carbon black, sodium carboxymethyl cellulose and styrene-butadiene rubber according to a mass ratio of 96:2: 1: 1, adding same into water and stirring same, and uniformly mixing same to obtain a first active slurry, the total solid content of the first active slurry being 50 wt%.

### [Regions of the second active material]

The second active material is hard carbon, and the process of manufacturing regions of the second active material is as follows:
weighing artificial graphite, conductive carbon black, sodium carboxymethyl cellulose and styrene-butadiene rubber according to a mass ratio of 96:2: 1: 1, adding same into water and stirring same, and uniformly mixing same to obtain a second active slurry, the total solid content of the second active slurry being 50 wt%.

### [Method for manufacturing the negative electrode plate]

With regard to a negative electrode plate including a first active layer and a second active layer, a first active slurry and a second active slurry are coated on a common copper foil (a current collector) with a thickness of 8 µm using an extrusion-type coating machine having two layers of cutter heads, and each layer of cutter heads is designed separately, so that the regions of the first active material and the regions of the second active material finally obtained by coating are films which are vertically distributed in two layers and are transversely distributed alternately. After coating, drying, cold pressing, and cutting are performed to obtain the negative electrode plate.

With regard to a negative electrode plate only including a first active layer, a first active slurry is coated on a common copper foil (current collector) 8 µm thick by using an extrusion-type coating machine, and after coating, drying, cold pressing and cutting are performed to obtain the negative electrode plate.

A vanadium-sodium-phosphate positive electrode plate, a separator and the described negative electrode plate are sequentially stacked, and wound to obtain a dry cell, in which the edge of the negative electrode plate exceeds the positive electrode plate by at least 4 mm (i.e. the size of each first region is at least 4 mm), and the positive electrode and the negative electrode are separated by the separator. The entire dry cell is placed in an aluminum plastic film, and then an electrolytic solution containing sodium salts is injected. The sodium ion battery is obtained by means of forming, degassing and packaging processes.

(3) Cycle Performance Test and Lithium Plating/Sodium Plating Detection:
charging and discharging the manufactured lithium ion battery/sodium ion battery at room temperature, with the voltage range being 2.5-3.65V; during charging, charging the battery, to 3.65 V, at a constant current of 1 C, and then charging the battery at a constant voltage until the current is less than 0.05 C; during discharging, discharging the battery, to 2.5 V, at a constant current of 1 C; and after 50 cycles of charge/discharge, recording the capacity retention ratio, and then disassembling the lithium ion/sodium ion battery and observing the lithium plating/sodium plating conditions of the negative electrode.

**Table 5: Performance test results of embodiments 1-15 and comparative embodiments 1-3**

| | lithium ion battery | | sodium ion battery | |
|---|---|---|---|---|
| | capacity retention ratio | Lithium plating condition | capacity retention ratio | Sodium plating condition |
| Embodiment 1 | 94.90% | No lithium plating | 91.00% | No sodium plating |
| Embodiment 2 | 91.50% | No lithium plating | 83.30% | No sodium plating |
| Embodiment 3 | 93.20% | No lithium plating | 87.30% | No sodium plating |
| Embodiment 4 | 95.30% | No lithium plating | 91.50% | No sodium plating |
| Embodiment 5 | 95.40% | No lithium plating | 91.20% | No sodium plating |
| Embodiment 6 | 95.10% | No lithium plating | 91.30% | No sodium plating |
| Embodiment 7 | 94.50% | No lithium plating | 90.90% | No sodium plating |
| Embodiment 8 | 94.00% | No lithium plating | 89.90% | No sodium plating |
| Embodiment 9 | 94.70% | No lithium plating | 89.80% | No sodium plating |
| Embodiment 10 | 94.30% | No lithium plating | 89.60% | No sodium plating |
| Embodiment 11 | 93.90% | No lithium plating | 88.80% | No sodium plating |
| Embodiment 12 | 88.50% | No lithium plating | 81.20% | No sodium plating |
| Embodiment 13 | 87.70% | No lithium plating | 79.50% | No sodium plating |
| Embodiment 14 | 93.8% | No lithium plating | 89.10% | No sodium plating |
| Embodiment 15 | 95.2% | No lithium plating | 90.90% | No sodium plating |
| Comparative embodiment 1 | 89.4% | No lithium plating | 82.10% | No sodium plating |
| Comparative embodiment 2 | 96.3% | Lithium plating | 91.70% | Sodium plating |
| Comparative embodiment 3 | 91.6% | Lithium plating | 83.50% | Sodium plating |

The negative electrode plates manufactured in embodiments 1-15 are respectively applied to a lithium ion battery and a sodium ion battery, in which neither lithium plating phenomenon nor sodium plating phenomenon occurs, and all of them have a relatively high cycle capacity retention ratio.

Embodiment 1 has a higher cycle capacity retention ratio compared with comparative embodiment 1, and the lithium plating phenomenon/sodium plating phenomenon does not occur in embodiment 1. The lithium plating phenomenon/sodium plating phenomenon does not occur in comparative embodiment 1, but as the content of the first active material in comparative embodiment 1 is higher, the consumption of lithium ions/sodium ions is too fast, and the capacity retention ratio after cycling is lower.

**In** comparative embodiment 2, lithium/sodium plating occurs in the first region of the negative electrode after cycling. This is because the lithium ion/sodium ion consumption rate of the second active material is slow, and the concentration of lithium ions/sodium ions in the first region is relatively high, resulting in lithium plating/sodium plating.

In embodiment 14, in the second region, the content of the second active material in embodiment 14 is higher than that in embodiment 1, the capacity retention ratio after cycling is higher, and the lithium/sodium plating phenomenon does not occur.

The slight lithium/sodium plating occurs in comparative embodiment 3, and it can be determined from embodiment 15 and comparative embodiment 3 that a suitable thickness of the first active layer and the second active layer and a suitable ratio of the first active material to the second active material contribute to inhibiting lithium/sodium plating.

It can be determined from the described performance test of the lithium ion battery that, the negative electrode plate provided in the present application can effectively avoid occurrence of lithium plating phenomenon, and further has a high capacity retention ratio. In addition, it can be determined from the performance test of the sodium ion battery that the negative electrode plate provided in the present application can also effectively avoid the occurrence of sodium plating, and further has a high capacity retention ratio.

It should be noted that the present application is not limited to the described embodiments. The described embodiments are only examples, and embodiments having substantially the same configurations and effects as those of the technical idea within the scope of the present application are all included in the technical scope of the present application. It should be noted that various modifications, that can be conceived by those skilled in the art, can be applied to the embodiments without departing from the spirit of the present invention, and other embodiments constructed by combining some of the components of the embodiments are also included in the scope of the present application.

## Claims

1. A negative electrode plate (1), comprising:
a current collector (10) and a first active layer (11) provided on a surface of the current collector (10), wherein
the first active layer (11) comprises a first active material and a second active material, a specific surface area of the first active material being greater than that of the second active material;
the current collector (10) comprises a first region (101) and a second region (102) which are provided in a first direction, the first active layer (11) corresponding to the first region (101) comprises the first active material, and the first active layer (11) corresponding to the second region (102) comprises the second active material, the first region (101) being a region formed by the negative electrode plate (1) protruding from a positive electrode plate (20) in the first direction, and the second region (102) being a region formed by the negative electrode plate (1) overlapping with the positive electrode plate (20) in the first direction.

2. The negative electrode plate (1) according to claim 1, wherein the specific surface area of the first active material is 1.5-25 m²/g, and the specific surface area of the second active material is 0.1-2 m²/g.

3. The negative electrode plate (1) according to claim 1 or 2, wherein the mass ratio of the first active material to the second active material in the first active layer (11) corresponding to the first region (101) is greater than 1, and the mass ratio of the first active material to the second active material in the first active layer (11) corresponding to the second region (102) is less than 1.

4. The negative electrode plate (1) according to any one of claims 1 to 3, further comprising a second active layer (12), wherein the second active layer (12) is located between the first active layer (11) and the current collector (10), the second active layer (12) comprises the first active material and the second active material, the second active layer (12) corresponding to the first region (101) comprises the second active material, and the second active layer (12) corresponding to the second region (102) comprises the first active material.

5. The negative electrode plate (1) according to claim 4, wherein the mass ratio of the second active material to the first active material in the second active layer (12) corresponding to the first region (101) is greater than 1, and the mass ratio of the second active material to the first active material in the second active layer (12) corresponding to the second region (102) is less than 1.

6. The negative electrode plate (1) according to any one of claims 1 to 5, wherein in the first direction, a region of the first active material and a region of the second active material are distributed alternately.

7. The negative electrode plate (1) according to any one of claims 1 to 6, wherein a capacity per gram of the region of the first active material is larger than a capacity per gram of the region of the second active material.

8. The negative electrode plate (1) according to claim 7, wherein the capacity per gram of the region of the first active material is 300-1500 mAh g⁻¹, and the capacity per gram of the region of the second active material is 200-400 mAh g⁻¹.

9. The negative electrode plate (1) according to any one of claims 1 to 8, wherein a porosity of the region of the first active material is smaller than a porosity of the region of the second active material.

10. The negative electrode plate (1) according to claim 9, wherein the porosity of the region of the first active material is 5-25%, and the porosity of the region of the second active material is 15-50%.

11. The negative electrode plate (1) according to any one of claims 1 to 10, wherein an adhesive force between the region of the first active material and the current collector (10) is greater than an adhesive force between the region of the second active material and the current collector (10).

12. The negative electrode plate (1) according to claim 11, wherein the adhesive force between the region of the first active material and the current collector (10) is 10-30 N/m, and the adhesive force between the region of the second active material and the current collector (10) is 0-15 N/m.

13. The negative electrode plate (1) according to any one of claims 3 to 12, wherein a thickness of the first active layer (11) is larger than a thickness of the second active layer (12).

14. The negative electrode plate (1) according to any one of claims 3 to 13, wherein the region of the first active material in the first active layer (11) are aligned with the region of the second active material in the second active layer (12).

15. The negative electrode plate (1) according to any one of claims 1 to 14, wherein the first active material and the second active material are selected from at least one of natural graphite, artificial graphite, soft carbon, hard carbon, a silicon-based material, and a metal oxide.

16. The negative electrode plate (1) according to claim 15, wherein the first active material is natural graphite; and/or the second active material is artificial graphite.

17. A secondary battery, comprising the negative electrode plate (1) according to any one of claims 1 to 16.

18. A battery module, comprising the secondary battery according to claim 17.

19. A battery pack, comprising the secondary battery according to claim 17 or the battery module according to claim 18.

20. An electric device, comprising at least one of the secondary battery according to claim 17, the battery module according to claim 18, and the battery pack according to claim 19.
